Europäisches Patentamt

European Patent Office

Office européen des brevets

(19)

(11) Veröffentlichungsnummer: **0 545 079 B1**

(12) **EUROPÄISCHE PATENTSCHRIFT**

(45) Veröffentlichungstag der Patentschrift: **02.08.95**

(51) Int. Cl.⁶: **C01B 31/02**, C01B 35/14

(21) Anmeldenummer: **92118685.4**

(22) Anmeldetag: **31.10.92**

(54) **Verfahren zur Herstellung von Fullerenen und Heterofullerenen.**

(30) Priorität: **30.11.91 DE 4139597**

(43) Veröffentlichungstag der Anmeldung:
**09.06.93 Patentblatt 93/23**

(45) Bekanntmachung des Hinweises auf die
Patenterteilung:
**02.08.95 Patentblatt 95/31**

(84) Benannte Vertragsstaaten:
**AT BE CH DE FR GB IT LI NL SE**

(56) Entgegenhaltungen:

IBM TECHNICAL DISCLOSURE BULLETIN Bd.
34, Nr. 4B, September 1991, NEW YORK US
Seite 222 UNBEKANNT

JOURNAL OF PHYSICAL CHEMISTRY Bd. 95,
Nr. 13, 27. Juni 1991, EASTON US Seiten 4948
- 4950 T. GUO ET AL.

(73) Patentinhaber: **HOECHST AKTIENGESELL-
SCHAFT**

**D-65926 Frankfurt (DE)**

(72) Erfinder: **Jansen, Martin, Prof. Dr.
Zur Marterkapelle 93
W-5300 Bonn 1 (DE)**
Erfinder: **Peters, Gregor
Ahornweg 3
W-5210 Troisdorf 19 (DE)**

Rank Xerox (UK) Business Services
(3.10/3.09/3.3.3)

EP 0 545 079 B1

## Beschreibung

Die Erfindung betrifft ein Verfahren zur Herstellung von Fullerenen. Unter dem Begriff Fulleren werden Kohlenstoffcluster mit einer Molekülgröße von $C_{28}$ bis $C_{98}$, insbesondere $C_{60}$ bis $C_{70}$, zusammengefaßt. Heterofulleren ist ein Kohlenstoffcluster, bei dem Kohlenstoff durch Bor und Stickstoff teilweise oder ganz substituiert ist.

Die Fullerene sind Festkörper und stellen neben Graphit und Diamant eine dritte allotrope Form (Formfamilie) des Kohlenstoffs dar, welche sich gegenüber den bekannten Formen durch ihren molekularen Aufbau unterscheidet.

Der Prototyp $C_{60}$ erhielt den Namen Buckminsterfulleren und hat die Gestalt eines Fußballs, der aus zwölf Fünfecken ($C_5$-Ring) und zwanzig Sechsecken ($C_6$-Ring) aufgebaut ist.

Die Fullerene sind sublimierbare Festkörper, die in organischen Lösemitteln zu einer rot-braunen Lösung begrenzt löslich sind. Obwohl die Herstellung makroskopischer Mengen (0,1 - 1 g) an Fullerenen erstmals 1990 von W. Krätschmer et el. "Solid $C_{60}$: a new form of carbon", Nature, Vol. 347 (1990), 354-358, beschrieben wurde, hat sich bereits ein breites Anwendungsfeld (Schmiermittel in Form miniaturisierter Kugellager, Batterierohstoff wegen seines Redoxverhaltens, Photokatalyse wegen der Anregung in den Triplettzustand des $C_{60}$ durch Licht der Wellenlänge 450 nm, Diamantsynthesen, Einschlußverbindungen) aufgetan. Aus dem Isolator $C_{60}$ können durch Reaktion mit Alkalimetallen metallische Leiter und auch Supraleiter mit Sprungtemperaturen von 18 K ($K_3C_{60}$) und 28 K ($Rb_3C_{60}$) erhalten werden, vgl. Nature, Vol. 350 (1991), 320 und 600.

Für die Fullerene und Heterofullerene hat sich ferner ein großes Anwendungsfeld wegen der Vielfalt der möglichen elektrocyclischen Reaktionen, da sich $C_{60}$ olefinähnlich verhält, eröffnet.

Das breite Anwendungsfeld der Fullerene und Heterofullerene hat eine hohe Nachfrage nach den Stoffen selbst, aber auch nach einfachen Herstellverfahren, ausgelöst.

Die Fulleren-Herstellung basiert bisher auf nicht kontinuierlichen Lichtbogenverfahren, bei welchen Graphit auf dem Wege quasikontaktierender Widerstandsheizung verdampft wird, Chem. Phys. Lett., Vol. 170 (1990) 167; Nature, Vol. 347 (1990), 354. Andere Herstellverfahren für Fulleren nutzen die Laser-Verdampfungstechnik, Nature, Vol. 318 (1985), 162. Schließlich ist in Chem. Phys. Lett., Vol. 137 (1987), 306, die Isolierung von Fulleren aus dem Ruß optimierter Flammen beschrieben.

Die Aufgabe dar vorliegenden Erfindung ist die Angabe eines Verfahrens zur Herstellung von Fulleren und Heterofulleren, bei dem ein Teil des Kohlenstoffs durch Bor und Stickstoff substituiert ist, mit vergrößerter Raum-Zeit-Ausbeute, welches zu einem kontinuierlichen Herstellverfahren erweitert werden kann.

Die Aufgabe wird dadurch gelöst, daß man Kohlanstofformkörper oder Kohlenstofformkörper in Kontakt mit Bornitridformkörpern in einer Schutzgasatmosphäre unter vermindertem Druck in einer induktiven Erhitzungszone verdampft und die verdampften Anteile auf einer Kühlfläche als fullerenhaltigen Ruß abscheidet und in einem Reinigungsschritt Fulleren oder Heterofulleren mit einem Lösemittel aus dem Ruß isoliert.

Das Verfahren der Erfindung kann weiterhin wahlweise noch dadurch gekennzeichnet sein, daß man

a) Kohlenstofformkörper aus Graphit, isostatisch gepreßtem Reinstgraphit, pyrolytischem Graphit oder aus aus polymeren Precursoren gewonnenem, Restwasserstoff enthaltendem, Glaskohlanstoff ainsetzt;

b) den Kohlenstofformkörper und den Bornitridformkörper in Form von zylindrischen Rohren einsetzt;

c) zylindrische Rohre mit einem lichten Durchmesser von 5 bis 60 mm und einer Wandstärke von 1 bis 25 mm als Formkörper einsetzt;

d) massive Kohlenstofformkörper einsetzt;

e) geschlitzte, lamellierte oder kegelförmige Kohlenstoffformkörper einsetzt;

f) unter Argon oder Helium bei einem Druck von 10 bis 400 hPa, insbesondere von 25 bis 200 hPa, als Schutzgasatmosphäre arbeitet;

g) um den Kohlenstofformkörper im Abstand ein oder mehrere Isolierrohre anordnet;

h) einen Abstand von 0,5 bis 20 mm zwischen dem Kohlenstofformkörper und den Isolierrohren wählt;

i) ein oder mehrere Isolierrohre aus Bornitrid einsetzt;

j) ein oder mehrere vielfach geschlitzte Isolierrohre aus Graphit einsetzt;

k) in einem Hochfrequenzofen als induktive Erhitzungszone arbeitet;

l) den Kohlenstofformkörper auf über 2500 °C, insbesondere auf 2600 bis 3500 °C, erhitzt;

m) den fullerenhaltigen Ruß auf einem wassergekühlten Quarzglasrohr als Kühlfläche abscheidet;

n) das Fulleren oder Heterofulleren mit Toluol als Lösemittel aus dem Ruß extrahiert;

o) einen langen Kohlanstofformkörper kontinuierlich so in die induktive Erhitzungszone einführt, daß dar verdampfte Kohlenstoff nachgeliefert wird.

Zur Optimierung des erfindungsgemäßen Verfahrens wird eine Angleichung das Leistungszuflusses durch den Induktor des Hochfrequenz-Generators und dar Wärmeabführung über das Kühlwaser dar Kühlfläche angestrebt. Insbesondere durch die Anordnung eines einfachen oder mehrfachan Isolierrohres aus pyrolytischem Bornitrid um den Kohlanstofformkörper wird die Ausbaute an Fulleren bzw. Heterofulleren erhöht, weil dann eine Temperaturerhöhung am Kohlenstofformkörper und eine Temperaturabsankung an dar Kühlfläche resultieren. Die zusätzliche Wirkung des Isolierrohres könnte durch die verlängerte und heißere Reaktionszone bedingt sein, in dar eventuell eine Gasphasenabscheidung von Fulleren an Rußpartikeln erfolgt, oder auch ein Kamineffekt eintritt. Rußabscheidungen an der Innenwand das Isolierrohres sind jedoch frei von Fullerenen.

Der innige Kontakt des Kohlenstofformkörpers mit einem Bornitridformkörper ergibt durch eine Cosublimation ein Verfahren zur Herstellung von Heterofullerenen.

Von der Firma Ringsdorff, Bonn, wurden Reinstgraphit Type EK 966 und pyrolytischer Graphit eingesetzt. Der Glaskohlenstoff wurde von der Firma Sigri, Meitingen, bezogen. Es wurde mit einem Hochfrequenzofen der Firma Hüttinger IG, Freiburg im Breisgau, Hochfrequenz-Generator dar Type 15/400 gearbeitet.

Die Verdampfung massiver Formkörper aus Graphit erfordert wagen der guten Wärmeleitung eine erhöhte Leistungsaufnahme. Durch eine Schlitzung oder Lamellierung kann dieser Wärmeleitung entgegengewirkt werden. Besser ist jedoch die Verdampfung von mechanisch stabilen Glaskohlenstoffrohren, deren Wärmeleitung geringer ist als die von Graphitrohren.

Die Temperatur des Formkörpers wird mittels eines Pyrometers gemessen. Beim Einsatz von Bornitridrohren werden Schlitze oder Löcher hierfür eingefräst.

Zur Ausbeutesteigerung wird die Apparatur vor dem Heizvorvorgang dreimal mit Edelgas gefüllt und danach auf $10^{-3}$ hPa evakuiert. Nach der letzten Evakuierung wird die Apparatur im Vakuum und dann unter strömendem Edelgas unter Normaldruck bei 900 °C ausgeheizt.

Es hat sich gezeigt, daß man unter Helium als Schutzgas bei etwa 150 hPa höhere Ausbeuten an Fulleren und Heterofulleren erzielt als wenn man unter Argon arbeitet. Bei Heliumdrucken von kleiner als 100 hPa werden kaum noch merkliche Mengen an Fulleren gebildet. In Argonatmosphäre treten häufig unerwünschte hellweißleuchtende Gasentladungen auf, wodurch dann eine Minderbildung von Fulleren und Heterofulleren beobachtet wird.

Die allgemeine Herstellung von Fulleren wird anhand der beigehefteten 2 Abbildungen näher erläutert: Im Quarzglasrohr 1 mit Wasserkühlung 2 wird durch den Induktor 3 mit Hochfrequenz-Generator 4 die induktive Erhitzungszone 5 aufgebaut. Auf das Quarzglasrohr 1 ist ein Kühler 6 mit Entlüftung 7 angeordnet. Am unteren Quarzglasrohr 1 ist ein T-Stück 8 mit den Drosseln 9 und 10, der Muffe 12 und dem Manometer 11 angeordnet. Die Drossel 9 reduziert den Edelgasfluß; die Drossel 10 ist mit einer Vakuumpumpe verbunden und steuert den Druck im Quarzglasrohr 1 nach dem Manometer 11. Durch die Muffe 12 ist ein Kupferrohr 13 geführt, durch das Kühlwasser geleitet wird und mit dem längere Kohlenstofformkörper in die induktive Erhitzungszone 5 nachgeführt werden können. Die Temperatur das Kohlenstofformkörpers wird mittels eines Pyrometers 19 gemessen.

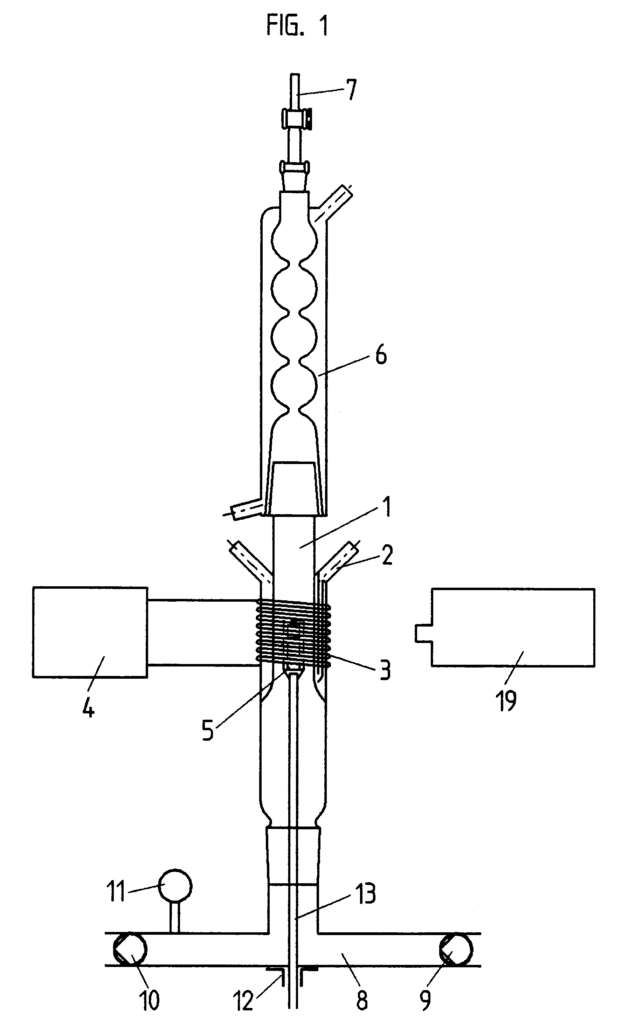

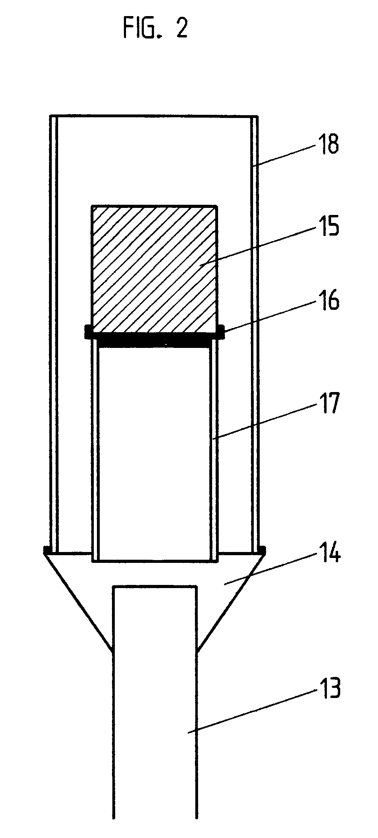

Die Anordnung des Kohlenstofformkörpers ist in der Fig. 2 im Detail dargestellt.

Am oberen Ende des Kupferrohres 13 ist als Träger ein Kupferblock 14 befestigt. Dar Kohlenstofformkörper 15 steht auf einer Trägerscheibe 16, die wiederum auf einem Trägerrohr 17 liegt. Das Trägerrohr 17 stützt sich auf dem Kupferblock 14 ab. Das Isolierrohr 18 - auch als Doppelrohranordnung möglich - stützt sich ebenfalls auf dem Kupferblock 14 ab.

Mit folgenden speziellen Aufbauteilen werden hohe Ausbeuten an Fulleren bzw. Heterofulleren erzielt:

```
1 Quarzglasrohrdurchmesser (innen):        50 mm.
  Quarzglasrohrdurchmesser (außen):        70 mm.
3 Induktor: 10 Windungen aus 6 mm Cu-Rohr,
            Höhe                           80 mm,
            Innendurchmesser               71 mm.
4 Hochfrequenz-Generator: 500 kHz,
            15 kW Klemmleistung.
15 Kohlenstofformkörper:
            Graphitrohr, Höhe:             25 mm,
                    Außendurchmesser:    22,5 mm,
                    Wandstärke:            2 mm.
16 Trägerscheibe aus Bornitrid.
17 Trägerrohr aus Bornitrid:
                    Außendurchmesser:     25 mm,
                    Wandstärke:            1 mm.
18 Isolierrohr aus Bornitrid:
                    Außendurchmesser:     40 mm,
                    Wandstärke:            1 mm,
                    Höhe:                 80 mm.
18 Zusätzliches Doppelisolierrohr aus
   Bornitrid:
                    Außendurchmesser:     29 mm,
                    Wandstärke:          0,5 mm,
                    Höhe:                 40 mm.


15 Kohlenstofformkörper in Kontakt mit einem
   Bornitridformkörper:
   Massives Glaskohlenstoffrohr oder Graphitrohr
                    Höhe:                 25 mm,
                    Außendurchmesser:   27,5 mm,
   Bornitridrohr
                    Innendurchmesser:     28 mm,
                    Wandstärke:          0,5 mm,
                    Höhe:                 40 mm.
```

4

**Patentansprüche**

1. Verfahren zur Herstellung von Fulleren und Heterofulleren, bei letzteren ist ein Teil des Kohlenstoffs durch Bor und Stickstoff substituiert, dadurch gekennzeichnet, daß man Kohlenstofformkörper oder Kohlenstofformkörper in Kontakt mit Bornitridformkörpern in einer Schutzgasatmosphäre unter vermindertem Normaldruck in einer induktiven Erhitzungszone verdampft und die verdampften Anteile auf einer Kühlfläche als fullerenhaltigen Ruß abscheidet und in einem Reinigungsschritt Fulleren oder Heterofulleren mit einem Lösemittel aus dem Ruß isoliert.

2. Verfahren nach Anspruch 1, dadurch gekennzeichnet, daß man Kohlenstofformkörper aus Graphit, isostatisch gepreßtem Reinstgraphit, pyrolytischem Graphit oder aus aus polymeren Precursoren gewonnenem, Restwasserstoff enthaltendem, Glaskohlenstoff einsetzt.

3. Verfahren nach Anspruch 1 oder 2, dadurch gekennzeichnet, daß man den Kohlenstofformkörper und den Bornitridformkörper in Form von zylindrischen Rohren einsetzt.

4. Verfahren nach einem der Ansprüche 1 bis 3, dadurch gekennzeichnet, daß man zylindrische Rohre mit einem lichten Durchmesser von 5 bis 60 mm und einer Wandstärke von 1 bis 25 mm als Formkörper einsetzt.

5. Verfahren nach Anspruch 1 oder 2, dadurch gekennzeichnet, daß man massive Kohlenstofformkörper einsetzt.

6. Verfahren nach einem der Ansprüche 1 bis 5, dadurch gekennzeichnet, daß man geschlitzte, lamellierte oder kegelförmige Kohlenstofformkörper einsetzt.

7. Verfahren nach einem der Ansprüche 1 bis 6, dadurch gekennzeichnet, daß man unter Argon oder Helium bei einem Druck von 10 bis 400 hPa, insbesondere von 25 bis 200 hPa, als Schutzgasatmosphäre arbeitet.

8. Verfahren nach einem der Ansprüche 1 bis 7, dadurch gekennzeichnet, daß man um den Kohlenstofformkörper im Abstand ein oder mehrere Isolierrohre anordnet.

9. Verfahren nach Anspruch 8, dadurch gekennzeichnet, daß man einen Abstand von 0,5 bis 20 mm zwischen dem Kohlenstofformkörper und den Isolierrohren wählt.

10. Verfahren nach Anspruch 8 oder 9, dadurch gekennzeichnet, daß man ein oder mehrere Isolierrohre aus Bornitrid einsetzt.

11. Verfahren nach Anspruch 8 oder 9, dadurch gekennzeichnet, daß man ein oder mehrere vielfach geschlitzte Isolierrohre aus Graphit einsetzt.

12. Verfahren nach einem der Ansprüche 1 bis 11, dadurch gekennzeichnet, daß man in einem Hochfrequenzofen als induktive Erhitzungszone arbeitet.

13. Verfahren nach einem der Ansprüche 1 bis 12, dadurch gekennzeichnet, daß man den Kohlenstofformkörper auf über 2500 °C, insbesondere auf 2600 bis 3500 °C, erhitzt.

14. Verfahren nach einem der Ansprüche 1 bis 13, dadurch gekennzeichnet, daß man den fullerenhaltigen Ruß auf einem wassergekühlten Quarzglasrohr als Kühlfläche abscheidet.

15. Verfahren nach einem der Ansprüche 1 bis 14, dadurch gekennzeichnet, daß man das Fulleren oder Heterofulleren mit Toluol als Lösemittel aus dem Ruß extrahiert.

16. Verfahren nach einem der Ansprüche 1 bis 15, dadurch gekennzeichnet, daß man einen langen Kohlenstofformkörper kontinuierlich so in die induktive Erhitzungszone einführt, daß der verdampfte Kohlenstoff nachgeliefert wird.

**Claims**

1. A process for the preparation of fullerene and heterofullerene, where part of the carbon is replaced by boron and nitrogen, which comprises vaporizing shaped carbon pieces or shaped carbon pieces in contact with shaped boron nitride pieces in an inert gas atmosphere under reduced pressure in an inductive heating zone and depositing the vaporized portions on a cold surface as fullerene-containing soot and isolating fullerene or heterofullerene in a purification step from the soot using a solvent.

2. The process as claimed in claim 1, wherein shaped carbon pieces made of graphite, isostatically pressed high-purity graphite, pyrolytic graphite or of glassy carbon obtained from polymer precursors and containing residual hydrogen are used.

3. The process as claimed in claim 1 or 2, wherein the shaped carbon piece and the shaped boron nitride piece are used in the form of cylindrical tubes.

4. The process as claimed in any one of claims 1 to 3, wherein the shaped pieces used are cylindrical tubes having an inside diameter of 5 to 60 mm and a wall thickness of 1 to 25 mm.

5. The process as claimed in claim 1 or 2, wherein solid shaped carbon pieces are used.

6. The process as claimed in any one of claims 1 to 5, wherein slotted, lamellated or cone-shaped carbon pieces are used.

7. The process as claimed in any one of claims 1 to 6, wherein the inert gas used is argon or helium under a pressure of 10 to 400 hPa, in particular of 25 to 200 hPa.

8. The process as claimed in any one of claims 1 to 7, wherein one or more insulating tubes are arranged around the shaped carbon piece at a distance.

9. The process as claimed in claim 8, wherein a distance of 0.5 to 20 mm between the shaped carbon piece and the insulating tubes is selected.

10. The process as claimed in claim 8 or 9, wherein any one or more insulating tubes made of boron nitride are used.

11. The process as claimed in claim 8 or 9, wherein one or more multi-slotted graphite insulating tubes are used.

12. The process as claimed in any one of claims 1 to 11, wherein the reaction is carried out in a high-frequency furnace as the inductive heating zone.

13. The process as claimed in any one of claims 1 to 12, wherein the shaped carbon piece is heated to above 2500°C, in particular to 2600 to 3500°C.

14. The process as claimed in any one of claims 1 to 13, wherein the fullerene-containing soot is deposited on a water-cooled quartz glass tube as the cold surface.

15. The process as claimed in any one of claims 1 to 14, wherein the fullerene or heterofullerene is extracted from the soot using toluene as the solvent.

16. The process as claimed in any one of claims 1 to 15, wherein a long shaped carbon piece is continuously introduced into the inductive heating zone so that the vaporized carbon is replenished.

**Revendications**

1. Procédé de préparation de fullerène et d'hétérofullerène dans lequel une partie du carbone est remplacée par du bore et de l'azote, caractérisé en ce qu'on vaporise des pièces moulées en carbone ou des pièces moulées en carbone en contact avec des pièces moulées en nitrure de bore dans une atmosphère de gaz protecteur sous pression normale réduite dans une zone de chauffage par induction, et on recueille les fractions vaporisées sur une surface de refroidissement, sous la forme d'une suie contenant du fullerène, puis, dans une phase d'épuration, on isole le fullerène ou hétérofullerène de la suie au moyen d'un solvant.

2. Procédé selon la revendication 1, caractérisé en ce qu'on utilise des pièces moulées en carbone composées de graphite, graphite de haute pureté comprimé sous compression isostatique, graphite pyrolytique ou carbone vitreux obtenu à partir de précurseurs polymères et contenant de l'hydrogène résiduel.

3. Procédé selon la revendication 1 ou 2, caractérisé en ce qu'on utilise la pièce moulée en carbone et la pièce moulée en nitrure de bore sous la forme de tubes cylindriques.

4. Procédé selon une des revendications 1 à 3, caractérisé en ce qu'on utilise, comme pièces moulées, des tubes cylindriques ayant un diamètre intérieur libre de 5 à 60 mm et une épaisseur de paroi de 1 à 25 mm.

5. Procédé selon la revendication 1 ou 2, caractérisée en ce qu'on utilise des pièces moulées en carbone massives.

6. Procédé selon une des revendications 1 à 5, caractérisé en ce qu'on utilise des pièces moulées en carbone fendues, lamellées ou coniques.

7. Procédé selon une des revendications 1 à 6, caractérisé en ce qu'on opère sous argon ou hélium, à une pression de 10 à 400 hPa, en particulier, de 25 à 200 hPa, comme atmosphère de gaz protecteur.

8. Procédé selon une des revendications 1 à 7, caractérisé en ce qu'on dispose un ou plusieurs tubes isolants à écartement autour de la pièce moulée en carbone.

9. Procédé selon la revendication 8, caractérisé en ce qu'on choisit un écartement de 0,5 à 20 mm entre la pièce moulée en carbone et les tubes isolants.

10. Procédé selon la revendication 8 ou 9, caractérisé en ce qu'on utilise un ou plusieurs tubes isolants en nitrure de bore.

11. Procédé selon la revendication 8 ou 9, caractérisé en ce qu'on utilise un ou plusieurs tubes isolants en graphite à fentes multiples.

12. Procédé selon une des revendications 1 à 11, caractérisé en ce qu'on opère dans un four à haute fréquence utilisé comme zone de chauffage par induction.

13. Procédé selon une des revendications 1 à 12, caractérisé en ce qu'on chauffe la pièce moulée en carbone à plus de 2500°C, en particulier à un niveau de 2600 à 3500°C.

14. Procédé selon une des revendications 1 à 13, caractérisé en ce qu'on recueille la suie contenant du fullerène sur un tube de verre siliceux refroidi par l'eau servant de surface de refroidissement.

15. Procédé selon une des revendications 1 à 14, caractérisé en ce qu'on extrait le fullerène ou hétérofullerène de la suie en utilisant du toluol comme solvant.

16. Procédé selon une des revendications 1 à 15, caractérisé en ce qu'on introduit continuellement une pièce moulée en carbone de grande longueur dans la zone de chauffage par induction pour remplacer progressivement le carbone vaporisé.

FIG. 1

FIG. 2